# EUROPEAN PATENT APPLICATION

(11) **EP 3 261 052 A1**
(43) Date of publication of application: **27.12.2017**
(21) Application number: 16776694.8
(22) Date of filing: 08.04.2016
(51) Int. Cl.: G06Q 50/18

(54) **INFORMATION PROCESSING DEVICE, METHOD, AND PROGRAM**

(30) Priority: 09.04.2015 JP 2015080124
(71) Applicant: Shobayashi, Masayuki, Tokyo 100-0005 (JP)
(72) Inventor: Shobayashi, Masayuki, Tokyo 100-0005 (JP)
(74) Representative: Wachenhausen & Kollegen Patentanwälte GbR
(86) International application number: PCT/JP2016/061585
(87) International publication number: WO 2016/163528

(57) **Abstract**

The purpose of the present invention is to easily present a large number of candidates who will make effective use of intellectual property rights to an intellectual property rights holder or the like who wishes for said intellectual property rights to be used. In an information processing device according to the present invention, an in-claim term extraction unit 51 extracts an in-claim term from the content of the claims included in a patent publication relating to patents rights that a patent holder wishes to be used. An in-description term extraction unit 52 extracts an in-description related term relating to the extracted in-claim term from the content of the description included in the patent publication. A notification recipient determination unit 53 determines a person who has registered a business operator-registered term related to the in-description related term as an notification recipient from among a plurality of business operators who have registered a predetermined document or the like as a business operator-registered term in advance. A notification unit 54 reports information related to the intellectual property rights to the terminal of a notification recipient.

## Description

### TECHNICAL FIELD

The present invention relates to an information processing device, method, and program.

### BACKGROUND ART

Heretofore, patent rights have been acquired by many companies with an aim to protect their businesses that are planned to be carried out or currently carried out. In order to acquire patent rights, an application and documents attached to the application are required to be submitted. Claims, a specification, drawings and an abstract exist as documents attached to an application. A great deal of research and development have been conducted for technologies to assist the creation of documents attached to an application (e.g. refer to Patent Document 1), or technologies to analyze the sentence structures, etc. in documents attached to an application (e.g. refer to Patent Document 2).
Patent Document 1: Japanese Unexamined Patent Application, Publication No. 2013-080278
Patent Document 2: Japanese Unexamined Patent Application, Publication No. JP 2014-010728

### DISCLOSURE OF THE INVENTION

### Problems to be Solved by the Invention

However, if patent rights are not practiced by the patentee, in many cases, the patent rights would not effectively be utilized, while the patent fee (annuity) is paid to merely maintain the patent rights. Here, since patent rights are property rights, even if the patent rights are not practiced by the patentee, the patent rights can effectively be utilized by transferring the rights, establishing an exclusive license, or granting a non-exclusive license. However, the situation has been extremely difficult for patentees to find partners (candidates who can effectively utilize the patent rights) to transfer the patent rights, establish an exclusive license, or grant a non-exclusive license. This situation holds true not only in patent rights but also in intellectual property rights in general.

The present invention has been made in view of the situation as such, and aims to easily present a multitude of candidates who can effectively utilize intellectual property rights to the right holder or the like who wishes the intellectual property rights to be utilized.

### Means for Solving the Problems

An information processing device according to one aspect of the present invention includes: first information extraction means that extracts a predetermined character, diagram, symbol or combination thereof as first information, from a content of a first document that may be included in a publication relating to an intellectual property right that a first user wishes to be utilized; second information extraction means that extracts, as second information, a character, diagram, symbol or combination thereof that is relevant to the extracted first information from a content of a second document that may be included in the publication; notification recipient determination means that determines a person who has registered third information that is relevant to the extracted second information, from a plurality of second users who have preregistered a predetermined character, diagram, symbol or combination thereof as third information, as a notification recipient; and notification means that reports information on the intellectual property right to a terminal of the notification recipient.

Here, the intellectual property right can be a patent right or utility model right; the first document can be a claim; and the second information can be a specification, drawing, or abstract.

The information processing device can further include response reception means that receives a first response indicating an interest in the intellectual property right, from a terminal of the notification recipient, to whom the information on the intellectual property right has been reported, in which the notification means can further report information on the notification recipient from whom the first response has been received, to a terminal of the first user, by excluding information that identifies the notification recipient.

The response reception means can further receive, from the terminal of the first user, a second response indicating a request for disclosure of information that identifies a selectee selected by the first user from among notification recipients from whom the first response has been received, and the notification means can further report the second response to a terminal of the selectee.

The notification means can further report information on the selectee to a person other than the selectee among the notification recipients from whom the first response has been received.

An information processing method and program according to one aspect of the present invention are a method and program compatible with the above-described information processing device according to one aspect of the present invention.

### Effects of the Invention

The present invention can easily present a multitude of candidates who can effectively utilize intellectual property rights to the right holder or the like who wishes the intellectual property rights to be utilized.

### BRIEF DESCRIPTION OF THE DRAWINGS

FIG. 1 is a block diagram illustrating a total configuration of an information processing system according to an embodiment of the present invention;
FIG. 2 is a block diagram illustrating a hardware configuration of a server as one embodiment of an information processing device, to which the present invention is applied, from among the constituents of the information processing system in FIG. 1;
FIG. 3 is a functional block diagram illustrating a functional configuration of the server;
FIG. 4 is a schematic diagram illustrating an outline of wished-to-be-utilized patent information provision processing; and
FIG. 5 is an arrow chart illustrating the flow of the wished-to-be-utilized patent information provision processing executed by the server having the functional configuration in FIG. 3.

### PREFERRED MODE FOR CARRYING OUT THE INVENTION

An embodiment of the present invention is hereinafter described with reference to the drawings.

### [Total Configuration]

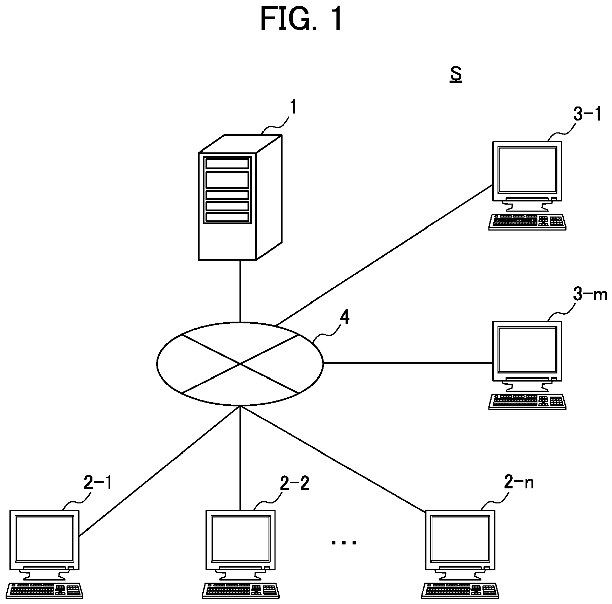

FIG. 1 is a block diagram illustrating a total configuration of an information processing system S according to an embodiment of the present invention.

As illustrated in FIG. 1, the information processing system S according to the present embodiment is configured by interconnecting a server 1, patentee terminals 2-1 to 2-n held by n patentees, respectively (n is an arbitrary integer value), and business operator terminals 3-1 to 3-m held by m business operators, respectively (m is an arbitrary integer value), via a network 4. Note that the patentee terminals 2-1 to 2-n, if not required to be individually distinguished from each other, are collectively referred to as "patentee terminal 2". Likewise, the business operator terminals 3-1 to 3-m, if not required to be individually distinguished from each other, are collectively referred to as "business operator terminal 3".

Note that, for the purpose of illustration herein, the patentee terminal 2 shall be operated by a patentee who wishes his/her patent rights to be utilized; however, such a person is not limited to a patentee, in particular. Specifically, the patentee terminal 2 may be operated by a patent applicant or a utility model applicant who can establish a provisional exclusive license or grant a provisional non-exclusive license, or a provisional exclusive licensee; a patentee or a utility model holder who can establish an exclusive license or grant a non-exclusive license, or an exclusive licensee; or a person who has a license of an operation by an agreement with any of the above-described persons. In other words, the target for utilization includes not only a patented invention but also an invention according to an unpatented patent application, an invention according to a patented utility model application, and an invention according to an unpatented utility model application.

Further, for the purpose of illustration herein, the business operator terminal 3 shall be operated by a business operator who runs a predetermined business, based on an exclusive license established or a non-exclusive license granted for predetermined patent rights; however, such a person is not limited to a business operator, in particular. In other words, the target for licensing is not specifically limited to patent rights or exclusive licenses as described above. Moreover, running a business at the time of licensing is not required in particular; and having a possibility to run a business in the future would be sufficient. Furthermore, as necessary, instead of being licensed, patent rights, utility model rights, rights to obtain a patent, or rights to obtain utility model registration may be obtained by transfer from each right holder who operates the patentee terminal 2.

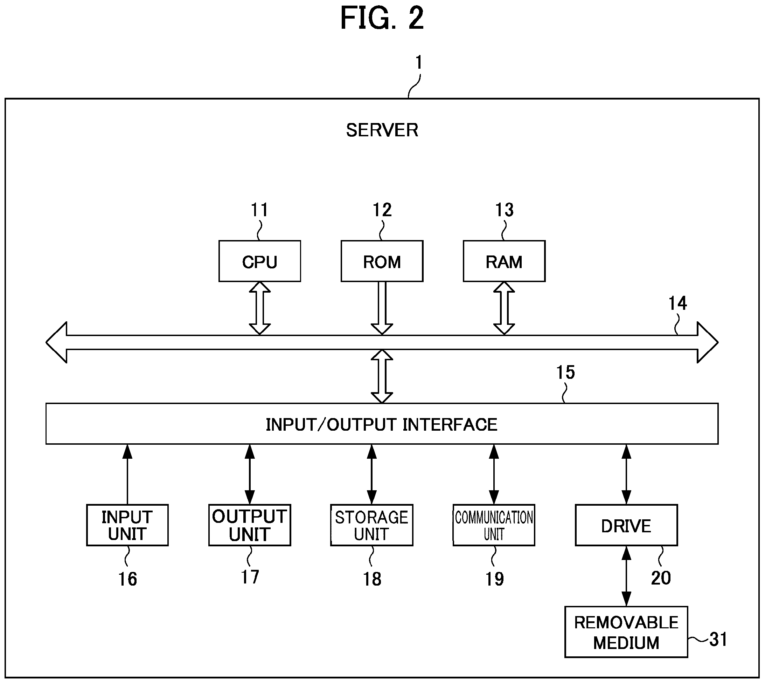

FIG. 2 is a block diagram illustrating a hardware configuration of the server 1 as one embodiment of an information processing device of the present invention.

The server 1 includes a CPU (Central Processing Unit) 11, ROM (Read Only Memory) 12, RAM (Random Access Memory) 13, a bus 14, an input/output interface 15, an input unit 16, an output unit 17, a storage unit 18, a communication unit 19, and a drive 20.

The CPU 11 executes various processing in accordance with a program stored in the ROM 12, or a program loaded from the storage unit 18 into the RAM 13. Data required for the CPU 11 to execute various processing, etc. are also stored in the RAM 13 as appropriate.

The CPU 11, the ROM 12 and the RAM 13 are interconnected via the bus 14. The input/output interface 15 is also connected to the bus 14. The input unit 16, the output unit 17, the storage unit 18, the communication unit 19 and the drive 20 are connected to the input/output interface 15.

The input unit 16 is configured with a keyboard, a mouse, etc., and inputs a variety of information in accordance with instruction operations by an operator. The output unit 17 is configured with a display, a speaker, etc., and outputs images and sound. The storage unit 18 is configured with a hard disk, DRAM (Dynamic Random Access Memory), etc., and stores a variety of data. The communication unit 19 controls communication with the patentee terminals 2 or the business operator terminals 3 via the network 4 including the Internet.

A removable medium 31, which is composed of a magnetic disk, an optical disk, a magneto optical disk, semiconductor memory or the like, is mounted on the drive 20 as appropriate. A program, which is read from the removable medium 31 by way of the drive 20, is installed on the storage unit 18 as necessary. Further, the removable medium 31 can also store a variety of data that has been stored in the storage unit 18, like the storage unit 18 does.

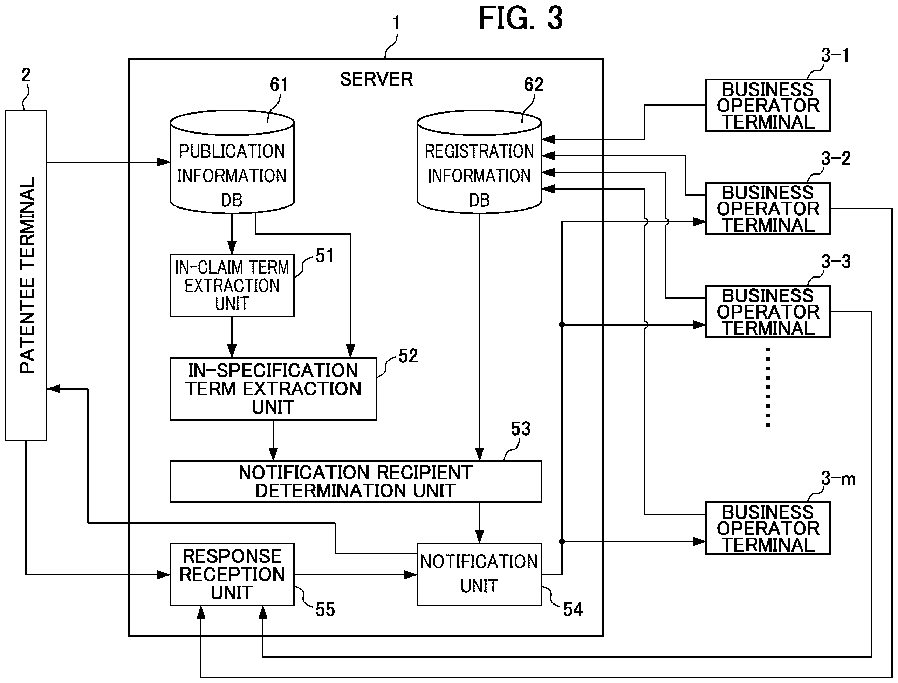

FIG. 3 is a functional block diagram illustrating a functional configuration of the server 1. An in-claim term extraction unit 51, an in-specification term extraction unit 52, a notification recipient determination unit 53, a notification unit 54, and a response reception unit 55 function in the CPU 11 of the server 1. A publication information DB 61 and a registration information DB 62 are provided to one region of the storage unit 18 of the server 1.

A patentee shall report information on patent rights that are wished to be utilized (for example, patent numbers, etc.) to the server 1 in advance. More specifically, contents of the publications (patent publications or application publications) of the patent rights shall have been stored as data in the publication information DB 61. Here, it is assumed that the patent rights that are wished to be utilized may be patent rights that have not been used for the business of the business operator, or patent rights for which an exclusive license has not been established or a non-exclusive license has not been granted, etc.

In other words, contents of publications of various patent rights reported from each of the patentee terminals 2-1 to 2-n have been stored as data in the publication information DB 61. Here, data of the contents of the publication does not specifically have to be data of the copy of the publication, and may be data in an arbitrary format; and it is sufficient that the contents of the publication, by definition, can be identified.

From among contents of claims included in a publication relating to a predetermined patent right that a predetermined patentee wishes to be utilized (hereinafter referred to as "wished-to-be-utilized patent right"), the in-claim term extraction unit 51 extracts a predetermined term as an in-claim term. Here, the technique or number of extracting in-claim terms is not specifically limited, and may be arbitrary. However, a claim defines a technical scope of patent rights (or defines an invention for which a patent is sought, at an application stage), and is quote-unquote contents of a title deed. Therefore, claims often express the contents which the patentee regards as most important in promoting the business at least when the patentee obtains the patent right.. Therefore, it is highly likely that the frequently appearing terms are that much important to the patentee, and represent the point (one of the special technical features) of the invention. Therefore, in the present embodiment, the in-claim term extraction unit 51 creates frequency distribution of the terms that appear in claims, and extracts the terms having a higher frequency (count of appearances) as in-claim terms.

From among the contents of a specification included in a publication relating to the wished-to-be-utilized patent right, the in-specification term extraction unit 52 extracts the terms relevant to the in-claim terms extracted, as in-specification relevant terms. Here, the technique of extracting the terms relevant to the in-claim terms is not specifically limited. For example, a technique of extraction by referring to known synonym dictionaries may be employed, or a technique of extraction by using machine learning utilizing a predetermined algorithm may be employed.

However, a specification describes specific technical contents as embodiments, to which the patented invention (invention according to the claims) is applied, and the terms indicating the specific technical contents are familiar to the business operator or the like. In other words, many of the terms preregistered by the business operator or the like, which will be described later, are estimated to indicate such technical contents; therefore, to enhance the rate of matching the terms as such, terms indicating the specific technical contents are preferably extracted as in-specification relevant terms. Here, given the relationship thereof with in-claim terms, in general, claims are frequently described in as broad a concept as possible, such that the scope of rights would be broad. Specifically, in-claim terms are frequently vague terms in a broader concept. In contrast, the terms indicating specific technical contents in a specification are frequently a narrower concept that illustrates examples of the broader concept (in-claim terms). In short, in a specification, terms representing specific technical contents frequently appear as terms describing a broader concept (in-claim terms). Therefore, the terms indicating specific technical contents can be extracted as terms collocating with a broader concept (in-claim terms). In other words, the terms collocating with a broader concept (in-claim terms) are preferably extracted as in-specification relevant terms.

Here, each business operator has preregistered terms relevant to his/her business, etc., for example, terms relating to the technology in which he/she is strong, on the registration information DB 62 by operating the business operator terminal 3. Note that a term registered on the registration information DB 62 is hereinafter referred to as "business operator's registered term".

Among the plurality of business operators (the business operators who operate the business operator terminals 3-1 to 3-N, respectively) who have preregistered such business operator's registered terms, the notification recipient determination unit 53 determines a person who has preregistered a business operator's registered term that is relevant to the in-specification relevant term extracted, as a notification recipient. Here, the technique to determine whether the business operator's registered term is relevant to the in-specification relevant term is not specifically limited. For example, a technique to determine identical terms to be simply relevant may be employed, or a technique to assess a similarity based on a predetermined algorithm and determine terms having a similarity above a certain level to be relevant may be employed.

The notification unit 54 reports information on the wished-to-be-utilized patent right to the terminal of the notification recipient (the business operator terminal 3). Here, the information reported to the notification recipient preferably includes contents of the publication of the wished-to-be-utilized patent right, and is not necessarily limited to the contents of the publication. Further, when a plurality of notification recipients (business operators) exist, such information does not have to be the same; for example, types of information, which have been preregistered for the plurality of notification recipients, may be reported, respectively.

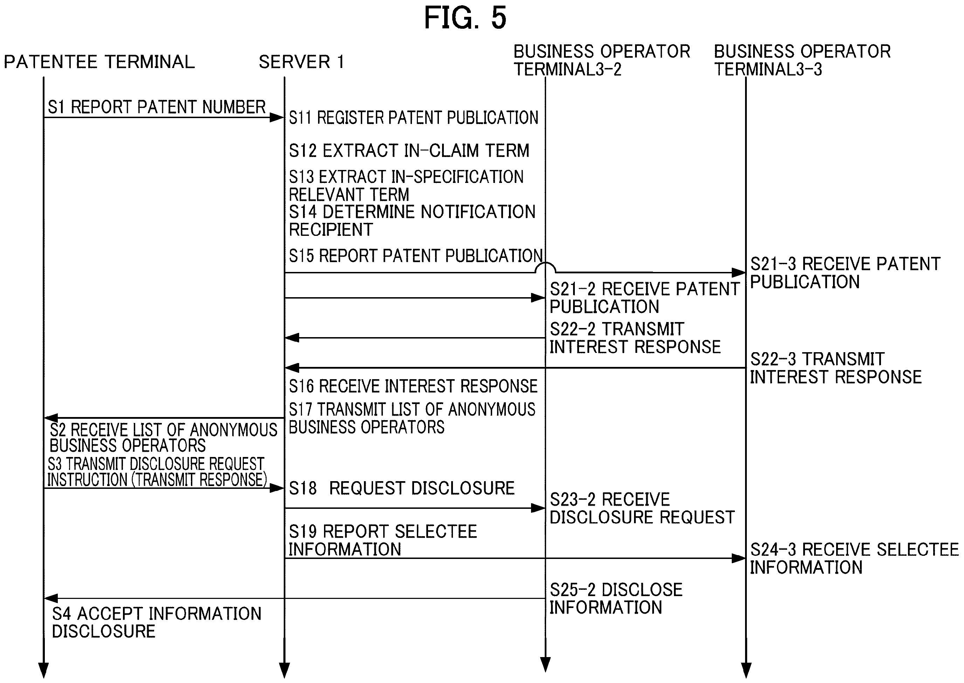

The response reception unit 55 receives a predetermined response from the terminal of the notification recipient (the business operator terminal 3), and reports the response to the notification unit 54. The notification unit 54 reports the response to the patentee terminal 2. In addition, the response reception unit 55 also receives a predetermined response from the patentee terminal 2. Note that specific examples of a response received by the response reception unit 55 will be described later with reference to FIG. 5.

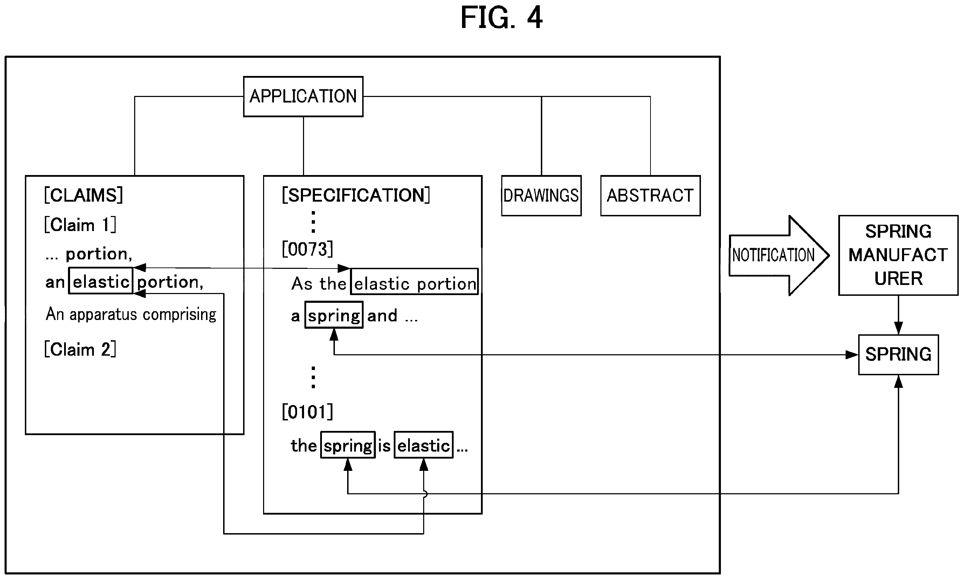

The sequence of processing executed by the server 1 having the functional configuration of FIG. 3 described above is hereinafter referred to as "wished-to-be-utilized patent information provision processing". FIG. 4 is a schematic diagram illustrating an outline of the wished-to-be-utilized patent information provision processing.

As illustrated in FIG. 4, a patent publication of a wished-to-be-utilized patent right includes an application, as well as claims, a specification, drawings and an abstract attached to the application. As set forth above, claims are quote-unquote a title deed, and are therefore frequently described in a broader concept such that that the scope of rights would be broad. For example, the example in FIG. 4 describes the term "elastic" in a broader concept. On the other hand, a specification takes the role as technical text for disclosing contents of a patented invention, and therefore frequently describes specific technical information. However, from a legal perspective, contents described in the claims are required to fall within the scope of descriptions in the specification; therefore, contents described in the claims are also described in the specification, which further describes specific technical information in text associated with (e.g. illustrated by examples of) the contents described in the claims, in many cases. For example, in the example in FIG. 4, "elastic" is associated with "spring", in paragraphs [0073] and [0101].

Therefore, when the in-claim term extraction unit 51 extracts "elastic" as an in-claim term from the claims, the in-specification term extraction unit 52 extracts "spring" as an in-specification relevant term that is relevant to the in-claim term "elastic", from among the contents of the specification.

On the other hand, for each of the business operators who operate the business operator terminals 3-1 to 3-m, respectively, the terms and the like indicating technical contents, in which his/her business or the like is strong, have been registered as "business operator's registered terms" on the registration information DB 62. For example, if the business operator is a spring manufacturer, "spring" as their manufacturing product has been registered as the business operator's registered term.

Among the plurality of business operators (the business operators who operate the business operator terminals 3-1 to 3-N, respectively) who have preregistered business operator's registered terms, the notification recipient determination unit 53 determines a spring manufacturer, who has preregistered the business operator's registered term (in this example, the same "spring") that is relevant to "spring" extracted as the in-specification relevant term, as a notification recipient. The notification unit 54 reports information on a wished-to-be-utilized patent right, such as, for example, information on the application, claims, specification, drawings and abstract in FIG. 4., to the terminal of the spring manufacturer (the business operator terminal 3).

In this manner, the information is reported to the terminal of the business operator who has preregistered the terms highly relevant to the terms included in the embodiment collocating with the terms included in the claims (the terms for highly relevant products or services), from among the information included in the patent publication relating to the wished-to-be-utilized patent right of the person (in this example, the patentee) who wishes his/her patent to be utilized. Therefore, simply by reporting information that can identify a publication of the wished-to-be-utilized patent right to the server 1, the patentee, who wishes his/her wished-to-be-utilized patent right such as an unutilized patent to be utilized, can present information on the wished-to-be-utilized patent right (information on the patent publication) to a business operator who is strong in the contents of embodiments or examples to which the patented invention relating to the wished-to-be-utilized patent right is applied. Note that, as described above, a business operator as used herein does not refer to only a person who is actually running a business, but includes a person who wishes to promote a business, or an introducer thereof as well.

Further, with reference to FIG. 5, details of the wished-to-be-utilized patent information provision processing executed by the server 1 having the functional configuration of FIG. 3 are described. FIG. 5 is an arrow chart illustrating the flow of the wished-to-be-utilized patent information provision processing.

In Step S1, the patentee terminal 2 reports a patent number of the wished-to-be-utilized patent right to the server 1. In Step S11, the server 1 registers the patent publication of the wished-to-be-utilized patent right on the publication information DB 61. Note that the information reported from the patentee terminal 2 to the server 1 in Step S1 does not have to be a patent number, in particular; and it is sufficient that the information enables the processing in Step S11. For example, the patentee terminal 2 may directly transmit data of the patent publication to the server 1.

In Step S12, an in-claim term is extracted from the claims relating to the wished-to-be-utilized patent right. In Step S13, from the specification relating to the wished-to-be-utilized patent right, the in-specification term extraction unit 52 extracts a term that is relevant to the in-claim term extracted in Step S12, as an in-specification relevant term. In Step S14, from among the business operators who operate the business operator terminals 3-1 to 3-N, respectively, the notification recipient determination unit 53 determines a person who has preregistered a business operator's registered term that is relevant to the in-specification relevant term extracted in Step S13, as a notification recipient. In Step S15, the notification unit 54 reports a patent publication relating to the wished-to-be-utilized patent right to the terminal of the notification recipient (the business operator terminal 3). Note that, in the example in FIG. 5, the patent publication relating to the wished-to-be-utilized patent right is reported to the business operator terminals 3-2 and 3-3 as the terminals of the notification recipients, among the business operator terminals 3-1 to 3-N.

In Step S21-2, the business operator terminal 3-2 receives the patent publication. Here, the notification recipient checks on the publication of the wished-to-be-utilized patent right, and if interested in the wished-to-be-utilized patent right, the notification recipient can transmit a response indicating the interest (hereinafter referred to as "interest response") to the server 1. In the example in FIG. 5, the business operator terminal 3-2 transmits an interest response in Step S22-2. Then, in Step S16, the response reception unit 55 of the server 1 receives and accepts the interest response.

Likewise, in Step S21-3, the business operator terminal 3-3 receives the patent publication. In Step S22-3, the business operator terminal 3-3 transmits an interest response. In Step S16, the response reception unit 55 of the server 1 receives and accepts the interest response. In Step S17, the notification unit 54 creates a list of information on at least two business operators who have transmitted an interest response (in this example, the business operators who operate the business operator terminals 3-2 and 3-3, respectively), in which the list excludes information that identifies the at least two business operators (hereinafter referred to as "list of anonymous business operators"), and transmits the list to the patentee terminal 2.

A patentee, who is presented with the list of anonymous business operators via the patentee terminal 2, selects a business operator, with whom a negotiation over licensing, etc. is wished (hereinafter referred to as "negotiation partner over licensing or the like"). In Step S3, the patentee terminal 2 reports an instruction for the negotiation partner over licensing or the like to disclose information that identifies the negotiation partner over licensing or the like (for example, cancel the anonymity), to the server 1. In Step S18, the response reception unit 55 of the server 1 receives the instruction as a response from the patentee. In Step S19, the notification unit 54 reports a disclosure request (a response from the patentee terminal 2) to the terminal of the negotiation partner over licensing or the like (in this example, the business operator terminal 3-2). If the business operator having been selected as a negotiation partner over licensing or the like agrees to negotiate with the patentee, the business operator terminal 3-2 of the business operator discloses the information that identifies the business operator, to the patentee terminal 2 in Step S25-2. In Step S4, the patentee terminal 2 accepts the information disclosure.

By way of such a sequence of processing from Step S17 to the subsequent steps, the business operator can easily explore the conditions of licensing or sale by the patentee, while avoiding any specific risk of patent infringement. Further, the business operator at the first stage of having an interest can report the interest to the patentee without identifying himself/herself (as staying anonymous). Therefore, it is assumed that the patentee would receive notification of an interest from a larger number of business operators than the case of them being anonymous. Therefore, the patentee can select a negotiation partner by comparing information on a larger number of business operators.

In addition, in Step S19, the notification unit 54 of the server 1 reports the information on the business operator selected by the patentee as the negotiation partner over licensing or the like (hereinafter referred to as "selectee information") to the terminal of the business operator (in this example, the business operator terminal 3-3) other than the negotiation partner over licensing or the like among the notification recipients. In Step S24-3, the business operator terminal 3-3 receives the selectee information. Here, it is sufficient that the contents of the selectee information are contents regarding the negotiation partner over licensing or the like, and may be business contents or the like of the negotiation partner over licensing or the like, or a business operator's registered term or the like of the negotiation partner over licensing or the like. By way of such processing in Step S19, etc., a business operator who has not been selected as a negotiation partner over licensing or the like can review why he/she has not been selected, by reference to the select information reported, and study, for example, the necessity of improving the business operator's registered term, based on the result of such review.

The embodiment of the present invention has been described above; however, the present invention is not limited to the above-described embodiment. Further, the effects described in the present embodiment are merely enumeration of the most preferred effects arising from the present invention, and the effects according to the present invention are not limited to those described in the present embodiment.

For example, according to the above-described embodiment, an in-claim term is extracted from the claims of a wished-to-be-utilized patent right; an in-specification relevant term being relevant to the in-claim term is extracted from the specification of the wished-to-be-utilized patent right; and information on the wished-to-be-utilized patent right is provided to a terminal of a business operator who has registered a business operator's registered term that is relevant to the in-specification relevant term. However, without any specific limitation to the above-described embodiment, for example, a character, diagram, symbol or combination thereof being relevant to the in-claim term (hereinafter referred to as "character, etc.") may be extracted from the specification, drawings or abstract. Further, the unit for registration by a business operator is not specifically limited to a business operator's registered term, and may be a predetermined character, etc. In this case as well, if the character, etc. registered by the business operator are relevant to the character, etc. relevant to the in-claim term, the information on the wished-to-be-utilized patent right will be provided to the terminal of the business operator. Moreover, the above-described embodiment assumes that a patentee wishes a wished-to-be-utilized patent right to be utilized; however, as set forth above, the target wished to be utilized is not specifically limited to a patent right, and can be rights in general which are granted on the premise of submission of at least two types of documents including a character, etc. For example, if a business operator has registered a picture or photograph relating to his/her business, a character, etc. included in the application may be extracted from the publication relating to the design right that the owner of the registered design right wishes to be utilized; contents of the drawings relevant to the character, etc. extracted may be extracted (partial contents of the drawings may be allowed); and a relevance between the drawings extracted and the picture or photograph registered by the business operator may be detected. In this case, the information on the design right will be provided to the terminal of the business operator who has registered the picture or photograph relevant to the drawings of the design right.

In other words, it is sufficient that the information processing device, to which the present embodiment is applied, includes a configuration as follows; and a wide variety of embodiments can be employed.

Specifically, the information processing device of the present invention includes: first information extraction means (e.g. in-claim term extraction unit 51 in FIG. 3) that extracts a predetermined character, diagram, symbol or combination thereof as first information (e.g. in-claim term), from a content of a first document (e.g. claim) that may be included in a publication relating to an intellectual property right (e.g. wished-to-be-utilized patent right) that a first user (e.g. patentee) wishes to be utilized; second information extraction means (e.g. in-specification term extraction unit 52 in FIG. 3) that extracts, as second information (e.g. in-specification relevant term), a character, diagram, symbol or combination thereof that is relevant to the extracted first information from a content of a second document (e.g. specification, etc.) that may be included in the publication; notification recipient determination means (e.g. notification recipient determination unit 53 in FIG. 3) that determines a person who has registered third information that is relevant to the extracted second information, from a plurality of second users (e.g. business operators) who have preregistered a predetermined character, diagram, symbol or combination thereof as third information (e.g. business operator's registered term), as a notification recipient; and notification means (e.g. notification unit 54 in FIG. 3) that reports information on the intellectual property right to a terminal of the notification recipient.

By employing the information processing device as such, the second information included in the second document relevant to the first information included in the first document is extracted from the information that may be included in the publication relating to the intellectual property right that the first user wishes to be utilized, and is reported to the terminals of the second users who have preregistered the third information being highly relevant to the second information. Therefore, by simply reporting the information (e.g. publication number, etc.) that can identify the information which may be included in the publication of the intellectual property right that is wished to be utilized, to the information processing device, the first user can present the information on the wished-to-be-utilized patent right (information on the patent publication, etc.) to the business operators who are strong in the second information relating to the intellectual property right.

Accordingly, a right holder or the like, who wishes his/her intellectual property right to be utilized, can be easily presented with a multitude of candidates who can effectively utilize the intellectual property right.

Moreover, the contents of the first document and the contents of the second document that may be included in the publication do not have to be a copy of the publication, but mean to also include each content of the first document and the second document that would be included in such a publication if issued. In other words, issuance of a publication is not essential, in particular; and the phrase "may be included in the publication" means including a possibility that information indicating the contents of the first document and the second document may exist, even at a stage before filing or a stage remaining unpublished after filing. Therefore, the contents of the first document and the second document that may be included in the publication also include contents such as, for example, contents of copy data of "claims" or "specification" maintained at the applicant's side at a stage remaining unpublished after filing, or contents of documents describing the contents of "claims" or "specification" at a stage before filing (e.g. an invention report, etc. created at the applicant's side). Further, the second user does not have to be a business operator as a candidate for such practice, in particular, and may also be intellectual property personnel at the applicant's side, etc. Based upon the foregoing, for example, the intellectual property personnel at the patent applicant's (company's) side, etc. can also effectively utilize a notification result from the information processing unit, as supporting information for estimating, at the stage before filing, such as "what companies would emerge to practice it, if an application is filed?".

The sequence of processing described above can be executed by way of hardware, or can be executed by way of software as well. In other words, the functional configuration in FIG. 3 merely illustrates an example, and is not specifically limited. Specifically, it is sufficient that the server 1 has a function capable of executing the above-mentioned sequence of processing as a whole, and what type of functional blocks should be used to implement this function is not limited to the example in FIG. 3, in particular. A single functional block may be configured with a single piece of hardware, a single installation of software, or a combination thereof.

When a sequence of processing is executed by way of software, a program configuring the software is installed from a network or a storage medium into a computer or the like. The computer may be a computer embedded in dedicated hardware. Further, the computer may be a computer capable of executing various functions by installing various programs, e.g., a general-purpose personal computer.

The storage medium containing such a program not only can be constituted by the removable medium 31 illustrated in FIG. 2 which is distributed separately from the device main body in order to supply the program to a user, but also can be constituted by a storage medium or the like supplied to the user in a state incorporated in the device main body in advance. The removable medium 31 is composed of, for example, a magnetic disk (including a floppy disk), an optical disk, a magnetic optical disk, or the like. The optical disk is composed of, for example, a CD-ROM (Compact Disk-Read Only Memory), a DVD (Digital Versatile Disk) or the like. The magnetic optical disk is composed of an MD (Mini-Disk) or the like. The storage medium supplied to the user in a state incorporated in the device main body in advance may include, for example, the ROM 12 illustrated in FIG. 2, a hard disk included in the storage unit 18 or the like, in which the program is recorded.

It should be noted that, in the present specification, the steps defining the program recorded in the storage medium include not only the processing executed in a time series following this order, but also processing executed in parallel or individually, which is not necessarily executed in a time series.

### EXPLANATION OF REFERENCE NUMERALS

1 ... server, 2 ... patentee terminal, 3 ... business operator terminal, 11 ... CPU, 12 ... ROM, 13 ... RAM, 14 ... bus, 15 ... input/output interface, 16 ... input unit, 17 ... output unit, 18 ... storage unit, 19 ... communication unit, 20 ... drive, 31 ... removable medium, 51 ... in-claim term extraction unit, 52 ... in-specification term extraction unit, 53 ... notification recipient determination unit, 54 ... notification unit, 55 ... response reception unit, 61 ... publication information DB, 62 ... registration information DB

## Claims

1. An information processing device, comprising:
first information extraction means that extracts a predetermined character, diagram, symbol or combination thereof as first information, from a content of a first document that may be included in a publication relating to an intellectual property right that a first user wishes to be utilized;
second information extraction means that extracts, as second information, a character, diagram, symbol or combination thereof that is relevant to the extracted first information from a content of a second document that may be included in the publication;
notification recipient determination means that determines a person who has registered third information that is relevant to the extracted second information, from a plurality of second users who have preregistered a predetermined character, diagram, symbol or combination thereof as third information, as a notification recipient; and notification means that reports information on the intellectual property right to a terminal of the notification recipient.

2. The information processing device according to claim 1, wherein
the intellectual property right is a patent right or utility model right,
the first document is a claim, and
the second information is a specification, drawing, or abstract.

3. The information processing device according to claim 1 or 2, further comprising response reception means that receives a first response indicating an interest in the intellectual property right, from a terminal of the notification recipient, to whom the information on the intellectual property right has been reported,
wherein the notification means further reports information on the notification recipient from whom the first response has been received, to a terminal of the first user, by excluding information that identifies the notification recipient.

4. The information processing device according to claim 3, wherein
the response reception means further receives, from the terminal of the first user, a second response indicating a request for disclosure of information that identifies a selectee selected by the first user from among notification recipients from whom the first response has been received, and
the notification means further reports the second response to a terminal of the selectee.

5. The information processing device according to claim 4, wherein
the notification means further reports information on the selectee to a person other than the selectee, from among the notification recipients from whom the first response has been received.

6. An information processing method executed by an information processing device, the method comprising:
a first information extraction step of extracting a predetermined character, diagram, symbol or combination thereof as first information, from a content of a first document that may be included in a publication relating to an intellectual property right that a first user wishes to be utilized;
a second information extraction step of extracting, as second information, a character, diagram, symbol or combination thereof that is relevant to the extracted first information from a content of a second document that may be included in the publication;
a notification recipient determination step of determining a notification recipient who has registered third information that is relevant to the extracted second information, from a plurality of second users who have preregistered a predetermined character, diagram, symbol or combination thereof as third information; and
a notification step of reporting information on the intellectual property right to a terminal of the notification recipient.

7. A program for causing a computer to execute the controlling processing comprising:
a first information extraction step of extracting a predetermined character, diagram, symbol or combination thereof as first information, from a content of a first document that may be included in a publication relating to an intellectual property right that a first user wishes to be utilized;
a second information extraction step of extracting, as second information, a character, diagram, symbol or combination thereof that is relevant to the extracted first information from a content of a second document that may be included in the publication;
a notification recipient determination step of determining a notification recipient who has registered third information relevant to the extracted second information, from a plurality of second users who have preregistered a predetermined character, diagram, symbol or combination thereof as third information; and
a notification step of reporting information on the intellectual property right to a terminal of the notification recipient.
